# EUROPÄISCHE PATENTSCHRIFT

(11) **EP 1 855 342 B1**
(45) Veröffentlichungstag und Bekanntmachung des Hinweises auf die Patenterteilung: **13.06.2012**
(21) Anmeldenummer: 07106785.4
(22) Anmeldetag: 24.04.2007
(51) Int. Cl.: H01M 8/04, B60L 11/00, H01M 8/06, H01M 8/12

(54) **Brennstoffzellensystem**
Fuel cell system
système de pile à combustible

(30) Priorität: 09.05.2006 DE 102006021866
(43) Veröffentlichungstag der Anmeldung: 14.11.2007
(73) Patentinhaber: J. Eberspächer GmbH & Co. KG, 73730 Esslingen (DE)
(72) Erfinder: Kaupert, Andreas, 73730, Esslingen (DE)
(74) Vertreter: BRP Renaud & Partner

(56) Entgegenhaltungen:
- EP-A- 1 739 777
- EP-A- 1 845 576
- DE-A1- 10 330 123
- DE-A1-102005 012 230
- US-A1- 2004 101 734
- US-A1- 2006 003 207

## Beschreibung

Die vorliegende Erfindung betrifft ein Brennstoffzellensystem, insbesondere für ein Kraftfahrzeug, mit den Merkmalen des Oberbegriffs des Anspruchs 1.

Aus der EP 1 739 777 A ist ein derartiges Brennstoffzellensystem bekannt, umfassend eine Brennstoffzelle zur Stromerzeugung aus Brenngas und Oxidatorgas, einen Reformer zur Brenngaserzeugung aus Kraftstoff und Oxidatorgas, eine Anodenabgasleitung zum Abführen von Anodenabgas aus der Brennstoffzelle, die an die Brennstoffzelle angeschlossen ist, eine Reformeroxidatorleitung zur Versorgung des Reformers mit Oxidatorgas, die an den Reformer angeschlossen ist, eine Rezirkulationsleitung zum Rückführen von Anodenabgas zum Reformer, die eingangsseitig an die Anodenabgasleitung und ausgangsseitig an den Reformer oder an die Reformeroxidatorleitung angeschlossen ist, eine Fördereinrichtung zum Antreiben des Anodenabgases, die einen Heißgasförderer zum Antreiben von ungekühltem Anodenabgas aufweist, und einen Restgasbrenner, der eingangsseitig an die Anodenabgasleitung sowie an eine an die Brennstoffzelle angeschlossene Kathodenabgasleitung und ausgangsseitig an eine Brennerabgasleitung angeschlossen ist.

Ein weiteres Brennstoffzellensystem ist beispielsweise aus der DE 10 2004 002 337 A1 bekannt und umfasst eine Brennstoffzelle zur Stromerzeugung aus Oxidatorgas und Brenngas sowie einen Reformer zur Brenngaserzeugung aus Oxidatorgas und Kraftstoff. Des Weiteren ist eine Anodenabgasleitung zum Abführen von Anodenabgas aus der Brennstoffzelle vorgesehen, die eingangsseitig an die Brennstoffzelle angeschlossen ist. Eine Reformeroxidatorleitung zur Versorgung des Reformers mit Oxidatorgas ist an den Reformer angeschlossen. Außerdem ist eine Rezirkulationsleitung zum Rückführen von Anodenabgas zum Reformer vorgesehen, die eingangsseitig an die Anodenabgasleitung und ausgangsseitig an den Reformer angeschlossen ist. Zum Antreiben des Anodenabgases ist eine Fördereinrichtung vorgesehen, die beim bekannten Brennstoffzellensystem in die Rezirkulationsleitung eingebunden ist. Beim bekannten Brennstoffzellensystem ist außerdem ein Rezirkulationswärmeübertrager vorgesehen, der einerseits stromauf der Fördereinrichtung in die Rezirkulationsleitung und andererseits in eine an die Brennstoffzelle angeschlossene Brennstoffzellenoxidatorleitung zur Versorgung der Brennstoffzelle mit Oxidatorgas eingebunden ist. Mit Hilfe dieses Rezirkulationswärmeübertragers kann das rezirkulierte Anodenabgas gekühlt werden. Hierdurch ist es beim bekannten Brennstoffzellensystem möglich, die Fördereinrichtung als Niedertemperaturgaspumpe auszugestalten, die als solche vergleichsweise preiswert realisierbar ist.

Weitere Brennstoffzellensysteme sind beispielsweise aus der DE 103 15 255 A1, aus der DE 10 2005 012230 A1, aus der US 2006/003207 A1 und aus der DE 10 2005 001 361 bekannt.

Die vorliegende Erfindung beschäftigt sich mit dem Problem, für ein Brennstoffzellensystem der eingangs genannten Art, eine verbesserte Ausführungsform anzugeben, die sich insbesondere durch eine vergleichsweise preiswerte Realisierbarkeit auszeichnet.

Dieses Problem wird erfindungsgemäß durch den Gegenstand der unabhängigen Ansprüche gelöst. Vorteilhafte Ausführungsformen sind Gegenstand der abhängigen Ansprüche.

Die Erfindung beruht bei einer ersten Lösung auf dem allgemeinen Gedanken, eine für hohe Temperaturen geeignete Fördereinrichtung, nämlich einen Heißgasförderer zu verwenden, der so ausgestaltet ist, dass er zum Antreiben von ungekühltem Anodenabgas geeignet ist. Durch die Verwendung eines derartigen Heißgasförderers kann eine zusätzliche Kühlung des Anodenabgases entfallen. Insbesondere kann somit auf einen Rezirkulationswärmeübertrager verzichtet werden. Die damit einhergehende Kostenersparnis kann die Mehrkosten eines Heißgasförderers gegenüber einem Niedertemperaturgasförderer überkompensieren. Gleichzeitig hebt das dem Reformer im wesentlichen ungekühlt zugeführte Anodenabgas die Prozesstemperatur im Reformer an, was die Verdampfung des in der Regel flüssigen Kraftstoffs und die Gemischbildung im Reformer verbessert. Die Verwendung des Heißgasförderers kann somit zu einer Steigerung des Wirkungsgrads des gesamten Brennstoffzellenprozesses führen.

Geeignete Heißgasförderer finden sich z.B. bei aufgeladenen Brennkraftmaschinen. Dort kommen Frischgasladeeinrichtungen zum Einsatz, die sich auch frischgasseitig auf relativ hohe Temperaturen aufheizen können. Dementsprechend ist der Heißgasförderer des Brennstoffzellensystems bei der Erfindung durch einen Verdichter einer solchen Frischgasladeeinrichtung, nämlich eines Abgasturboladers gebildet oder zumindest nach Art eines derartigen Verdichters ausgestaltet. Auf diese Weise kann auf zuverlässige Konstruktionen zurückgegriffen werden, die in Abhängigkeit der zu fördernden Volumenströme entweder direkt anwendbar sind oder noch hinsichtlich des im Brennstoffzellensystem zu fördernden Volumenstroms modifiziert werden müssen. Erfindungsgemäß handelt es sich bei der Frischgasladeeinrichtung um einen Abgasturbolader, dessen Verdichter als Heißgasförderer verwendet wird und der im Brennstoffzellensystem mit Turbine zur Anwendung kommt, wobei die Turbine durch das Brennerabgas angetrieben ist.

Eine vorteilhafte Ausführungsform auf dem allgemeinen Gedanken, das Anodenabgas stromauf der Fördereinrichtung durch Zumischung zu dem dem Reformer zugeführten Oxidatorgas abzukühlen. Die Fördereinrichtung fördert dann ein Gemisch aus Oxidatorgas und Anodenabgas, dessen Temperatur gegenüber der Temperatur des ungekühlten Anodenabgases beträchtlich reduziert ist. Je nach Mischungsverhältnis ist es somit auch bei dieser Ausführungsform möglich, auf einen Rezirkulationswärmeübertrager zu verzichten, wobei gleichzeitig die Fördereinrichtung nur auf vergleichsweise niedrige Gastemperaturen ausgelegt werden muss, so dass z.B. ein preiswerter Niedertemperaturgasförderer einsetzbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

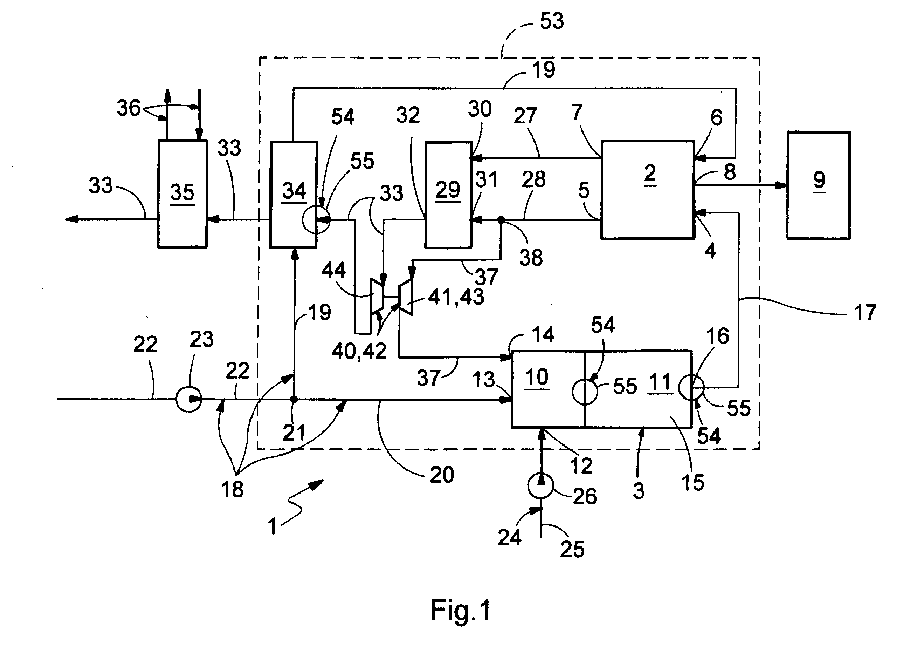

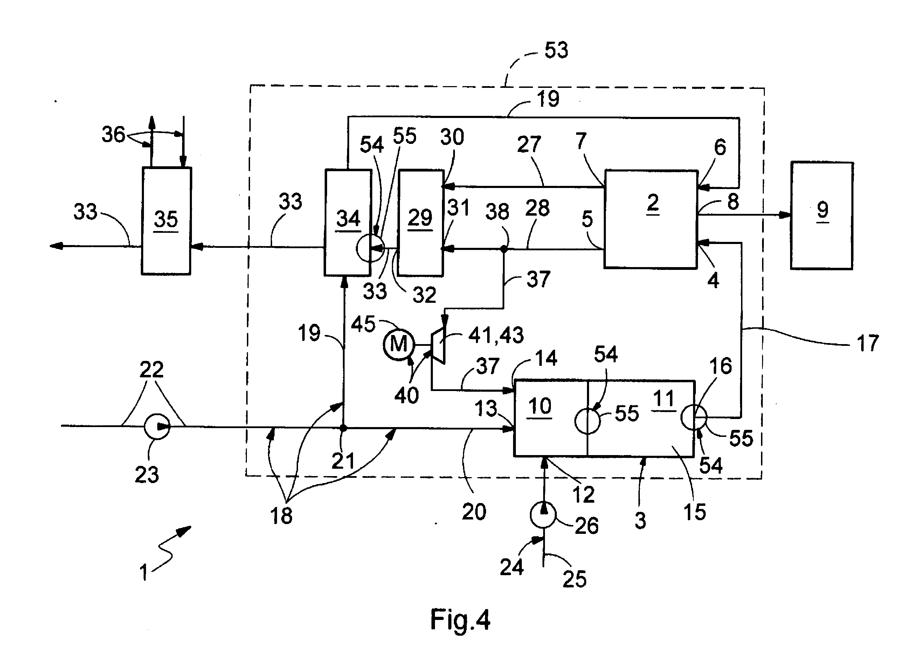

- Fig. 1 bis 8: jeweils eine stark vereinfachte, schaltplan- artige Prinzipdarstellung eines Brennstoff- zellensystems bei unterschiedlichen Ausfüh- rungsformen, wobei die Fig. 1 bis 3 und 6 vom Schutzbereich der Ansprüche umfasste Ausfüh- rungsformen zeigen, während die Fig. 4, 5, 7 und 8 andere, nicht vom Schutzbereich der An- sprüche umfasste Ausführungsformen zeigen.

Entsprechend den Fig. 1 bis 8 umfasst ein Brennstoffzellensystem 1, das bevorzugt in einem Kraftfahrzeug angeordnet sein kann, zumindest eine Brennstoffzelle 2 und einen Reformer 3. Die Brennstoffzelle 2 dient zur Erzeugung von Strom, den sie in bekannter Weise aus einem Oxidatorgas und einem Brenngas erzeugt. Die Brennstoffzelle 2 kann beispielsweise als Festkörper-Brennstoffzelle (SOFC) und vorzugsweise als Hochtemperatur-Brennstoffzelle ausgebildet sein. Für die Stromerzeugung wird die Brennstoffzelle 2 kathodenseitig mit dem Oxidatorgas versorgt, das beispielsweise durch Luft oder durch reinen Sauerstoff gebildet ist. Außerdem wird die Brennstoffzelle 2 im Betrieb anodenseitig mit dem Brenngas versorgt, das wasserstoffhaltig ist. Dementsprechend weist die Brennstoffzelle 2 hier einen Anodeneingang 4, einen Anodenausgang 5, einen Kathodeneingang 6, einen Kathodenausgang 7 und zumindest einen elektrischen Anschluss oder Stromanschluss 8 auf. Über den wenigstens einen Stromanschluss 8 ist zumindest ein elektrischer Verbraucher 9 an die Brennstoffzelle 2 bzw. an das Brennstoffzellensystem 1 angeschlossen bzw. anschließbar.

Bei einem in einem Kraftfahrzeug angeordneten Brennstoffzellensystem 1 handelt es sich bei den elektrischen Verbrauchern 9 vorzugsweise um solche, die für den normalen Fahrbetrieb des Fahrzeugs nicht erforderlich sind. Vielmehr dienen diese Verbraucher dem Fahrzeugführer zur Komfortsteigerung, wenn das Fahrzeug ruht, also wenn eine Brennkraftmaschine des Fahrzeugs ausgeschaltet ist. Das Brennstoffzellensystem 1 stellt im Fahrzeug demnach eine motorunabhängige Stromversorgung bereit. Verbraucher 9 können beispielsweise sein, eine Klimaanlage, ein Fernsehgerät, ein Kühlschrank, eine Kochstelle, eine Mikrowellenherd und das Brennstoffzellensystem 1 selbst. Insbesondere kann das Brennstoffzellensystem 1 im Fahrzeugbetrieb eine Lichtmaschine ersetzen, so dass sämtliche elektrische Verbraucher des Fahrzeugs dann mit der Brennstoffzelle 2 verbundene Verbraucher 9 sind.

Der Reformer 3 dient zur Erzeugung des wasserstoffhaltigen Brenngases, das er in bekannter Weise aus Oxidatorgas, vorzugsweise Luft oder Sauerstoff, und aus Kraftstoff, vorzugsweise Kohlenwasserstoffe, generiert. Bevorzugt, wird als Kraftstoff zur Versorgung des Reformers 3 derjenige Kraftstoff verwendet, der in dem mit dem Brennstoffzellensystem 1 ausgestatteten Fahrzeug zur Versorgung einer Brennkraftmaschine ohnehin zur Verfügung steht, also zum Beispiel Benzin, Diesel, Erdgas.

Der Reformer 3 umfasst einen Gemischbildungsabschnitt 10 und unmittelbar daran angrenzend einen Katalysatorabschnitt 11. Im Gemischbildungsabschnitt 10 erfolgt die Bildung eines Gemischs aus Oxidatorgas und Kraftstoff. Gleichzeitig kann der Gemischbildungsabschnitt 10 auch als Verdampfer arbeiten, wenn ein flüssiger Kraftstoff verwendet wird. Am Gemischbildungsabschnitt 10 sind ein Kraftstoffeingang 12 und ein Oxidatoreingang 13 des Reformers 3 angeordnet. Bei den Ausführungsformen der Fig. 1, 3 und 4 weist der Reformer 3 außerdem einen Rezirkulationseingang 14 auf.

Der Katalysatorabschnitt 11 dient zur Umsetzung des vom Gemischbildungsabschnitt 10 bereitgestellten Gemischs in wasserstoffhaltiges Brenngas. Hierzu umfasst der Katalysatorabschnitt 11 einen Katalysator 15 aus einem zur Herstellung eines derartigen Brenngases geeigneten Katalysatormaterial, das z. B. auf ein geeignetes Substrat, beispielsweise aus Keramik oder Metall aufgebracht ist. Am Katalysatorabschnitt 11 ist ein Brenngasausgang 16 des Reformers 3 ausgebildet, der über eine Brenngasleitung 17 mit dem Anodeneingang 4 verbunden ist.

Zur Versorgung der Brennstoffzelle 2 und des Reformers 3 mit Oxidatorgas ist zumindest eine Oxidatorversorgungseinrichtung 18 vorgesehen, die beispielsweise eine Brennstoffzellenoxidatorleitung 19, die an den Kathodeneingang 6 angeschlossen ist, und eine Reformeroxidatorleitung 20 aufweist, die an den Oxidatoreingang 13 angeschlossen ist. Die beiden Oxidatorleitungen 19, 20 zweigen beispielsweise bei 21 von einer gemeinsamen Oxidatorversorgungsleitung 22 ab, in der eine Pumpeinrichtung 23 zum Antreiben des Oxidatorgases zur Brennstoffzelle 2 bzw. zum Reformer 3 angeordnet ist. Die Abzweigstelle 21 kann durch eine Ventilanordnung gebildet sein, die den Durchfluss durch die eine und/oder durch die andere Oxidatorleitung 19, 20 steuert bzw. regelt. Alternativ können auch zwei separate Oxidatorversorgungseinrichtungen 18 vorgesehen sein, die Reformer 3 und Brennstoffzelle 2 getrennt mit Oxidatorgas versorgen.

Zur Versorgung des Reformers 3 mit Kraftstoff ist eine Kraftstoffversorgungseinrichtung 24 vorgesehen, die eine an den Kraftstoffeingang 12 angeschlossene Kraftstoffversorgungsleitung 25 sowie eine darin angeordnete Pumpeinrichtung 26 aufweist.

An den Kathodenausgang 7 ist eine Kathodenabgasleitung 27 zum Abführen von Kathodenabgas angeschlossen. An den Anodenausgang 5 ist eine Anodenabgasleitung 28 zum Abführen von Anodenabgas angeschlossen. Bei den hier gezeigten, bevorzugten Ausführungsformen ist das Brennstoffzellensystem 1 außerdem mit einem Restgasbrenner 29 ausgestattet, in dem eine Verbrennungsreaktion stattfindet, um im Anodenabgas vorhandenes restliches Brenngas mit im Kathodenabgas vorhandenem Oxidatorgas zu verbrennen. Der Restgasbrenner 29 weist eingangsseitig einen Kathodenabgaseingang 30 sowie einen Anodenabgaseingang 31 auf. Ausgangsseitig besitzt der Restgasbrenner 29 einen Brennerabgasausgang 32. Die Kathodenabgasleitung 27 ist an den Kathodenabgaseingang 30 angeschlossen, während die Anodenabgasleitung 28 an den Anodenabgaseingang 31 angeschlossen ist. An den Brennerabgasausgang 32 ist eine Brennerabgasleitung 33 angeschlossen. Zur Ausnutzung der im Brennerabgas enthaltenen Wärme kann das Brennstoffzellensystem 1 außerdem mit einem Wärmeübertrager 34 ausgestattet sein, der im folgenden auch als Hauptwärmeübertrager 34 bezeichnet wird. Der Hauptwärmeübertrager 34 ist einerseits in die Brennerabgasleitung 33 stromab des Restgasbrenners 29 und andererseits in die Brennstoffzellenoxidatorleitung 19 eingebunden. Der Hauptwärmeübertrager 34 ermöglicht somit eine wärmeübertragende Kopplung zwischen dem Brennerabgas und dem der Brennstoffzelle 2 zugeführten Oxidatorgas.

Des Weiteren kann das Brennstoffzellensystem 1 optional mit einem weiteren Wärmeübertrager 35 ausgestattet sein, der im folgenden auch als Zusatzwärmeübertrager 35 bezeichnet wird. Der Zusatzwärmeübertrager 35 ist einerseits in die Brennerabgasleitung 33 stromab des Hauptwärmeübertragers 34 und andererseits in einen Abwärmepfad 36 eingebunden. Der Abwärmepfad 36 dient ebenfalls zur Nutzung von im Brennerabgas enthaltener Wärme. Beispielsweise ist der Abwärmepfad 36 durch eine Kühlmittelleitung eines Kühlmittelkreises der Brennkraftmaschine des Fahrzeugs gebildet. Das Brennstoffzellensystem 1 kann dann beispielsweise als Zuheizer für die Brennkraftmaschine genutzt werden. Alternativ kann der Abwärmepfad 36 durch eine Warmluftleitung einer Innenraumheizeinrichtung des Fahrzeugs gebildet sein. Das Brennstoffzellensystem 1 lässt sich dann als Standheizung für das Fahrzeug verwenden, wenn ein Gebläse der Innenraumheizeinrichtung einen der Verbraucher 9 bildet.

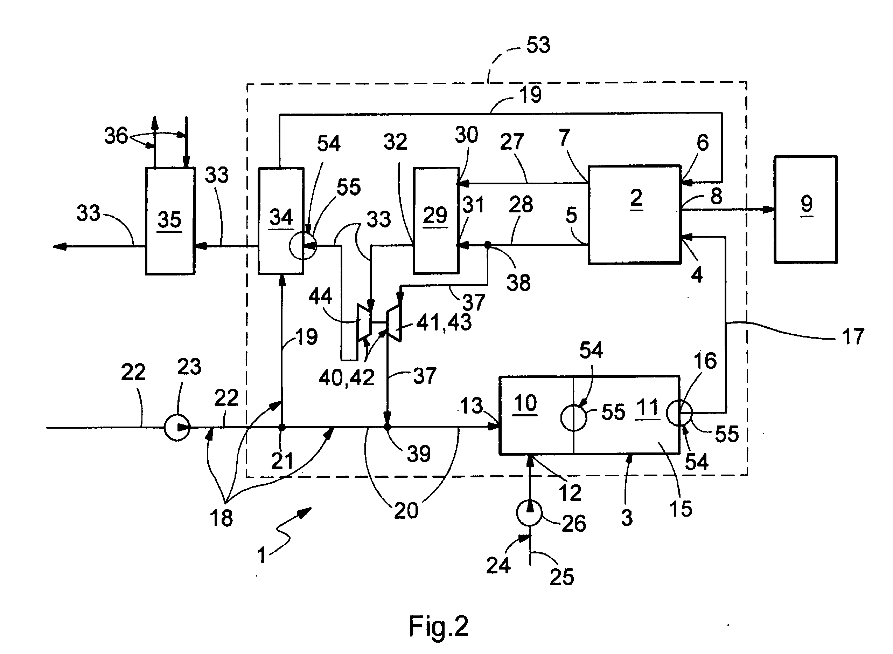

Das Brennstoffzellensystem 1 ist außerdem mit einer Rezirkulationsleitung 37 ausgestattet, die eingangsseitig über eine Anschlussstelle 38 an die Anodenabgasleitung 28 angeschlossen ist. Ausgangsseitig ist die Rezirkulationsleitung 37 bei den Ausführungsformen der Fig. 1, 3 und 4 über den Rezirkulationseingang 14 an den Reformer 3 und bei den Ausführungsformen der Fig. 2 und 5 bis 8 über eine Anschlussstelle 39 an die Reformeroxidatorleitung 20 angeschlossen. Die Rezirkulationsleitung 37 ermöglicht somit eine direkte oder indirekte Rückführung von Anodenabgas in den Reformer 3.

Das Brennstoffzellensystem 1 weist außerdem eine Fördereinrichtung 40 auf, die zum Antreiben des Anodenabgases dient.

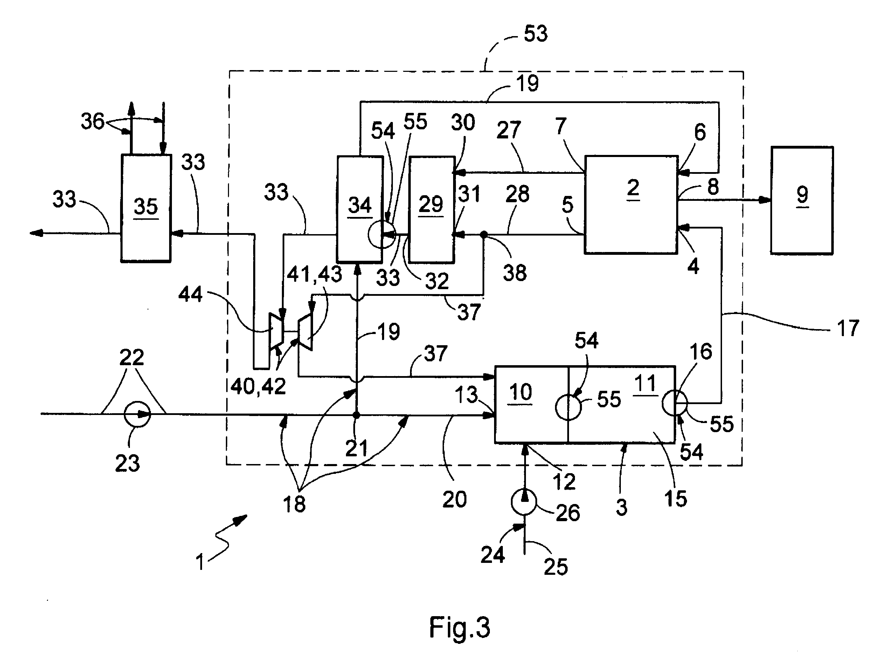

Bei den Ausführungsformen der Fig. 1 bis 6 weist die Fördereinrichtung 40 einen Heißgasförderer 41 auf, der so ausgestaltet ist, dass er sich zum Antreiben von ungekühltem Anodenabgas eignet. Bei den Ausführungsformen der Fig. 1 bis 3 und 6 ist die Fördereinrichtung 40 durch einen Abgasturbolader 42 gebildet, der in üblicher Weise einen Verdichter 43 und eine damit antriebsgekoppelte Turbine 44 aufweist. Der Verdichter 43 des Abgasturboladers 42 bildet den Heißgasförderer 41 der Fördereinrichtung 40. Die Turbine 44 ist in die Brennerabgasleitung 33 eingebunden. Bei den in den Fig. 1, 2 und 6 gezeigten Ausführungsformen ist die Turbine 44 stromauf des Hauptwärmeübertragers 34 in die Brennerabgasleitung 33 eingebunden. Bei der in Fig. 3 gezeigten Ausführungsform ist die Turbine 44 stromab des Hauptwärmeübertragers 34 in die Brennerabgasleitung 33 eingebunden. Die in Fig. 2 gezeigte Ausführungsform unterscheidet sich von der in Fig. 1 gezeigten Ausführungsform dadurch, dass bei der in Fig. 1 gezeigten Ausführungsform die Rezirkulationsleitung 37 ausgangsseitig über den Rezirkulationseingang 14 an den Reformer 3 angeschlossen ist, während sie bei der Ausführungsform gemäß Fig. 2 über die Anschlussstelle 39 an die Reformeroxidatorleitung 20 angeschlossen ist. Bei der in Fig. 2 gezeigten Ausführungsform erfolgt somit innerhalb der Reformeroxidatorleitung 20 stromab der Anschlussstelle 39 eine Gemischbildung zwischen Oxidatorgas und Anodenabgas.

Bei der in Fig. 3 gezeigten Ausführungsform ist die Rezirkulationsleitung 37 analog zur Ausführungsform gemäß Fig. 1 an den Reformer 3 angeschlossen. Ebenso ist es analog zur Ausführungsform gemäß Fig. 2 möglich, auch hier die Rezirkulationsleitung 37 an die Reformeroxidatorleitung 20 anzuschließen.

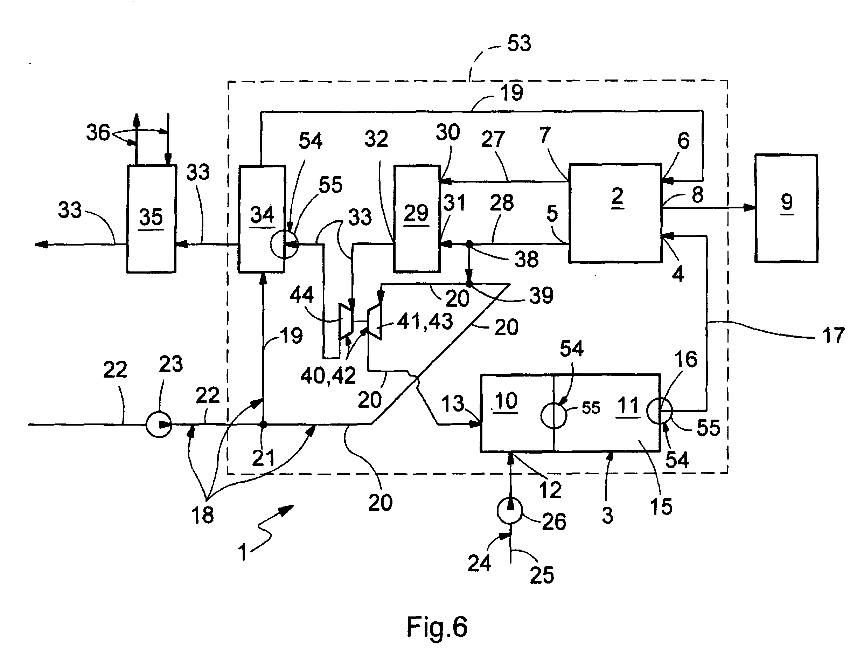

Bei den Ausführungsformen der Fig. 1 bis 4 ist der Heißgasförderer in die Rezirkulationsleitung 37 eingebunden, während er bei der Ausführungsform gemäß Fig. 6 in die Reformeroxdiatorleitung 20 stromab der Anschlussstelle 39 eingebunden ist. Bei dieser Ausführung wird dem Verdichter 43 saugseitig ein Gemisch aus Oxidatorgas und Anodenabgas zugeführt, das jedenfalls kälter ist als das ungekühlte Anodenabgas. Die Ausführungsform gemäß Fig. 6 entspricht dabei weitgehend einer Abwandlung der Ausführung gemäß Fig. 1. Analoge Abwandlungen sind auch zu den Ausführungen der Fig. 2 bis 4 möglich, um den Verdichter 43 durch Zumischung zum Reformeroxidatorgas mit gekühltem Anodenabgas zu beaufschlagen.

Zur Realisierung des Abgasturboladers 42 ist es insbesondere möglich, auf eine als Abgasturbolader ausgestaltete Frischgasladeeinrichtung einer Brennkraftmaschine zurückzugreifen. Hierdurch ist es möglich, bestehende und in der Praxis bewährte Abgasturbolader zum Antreiben des Anodenabgases zu verwenden. In Abhängigkeit des im jeweiligen konkreten Brennstoffzellensystem 1 zu fördernden Volumenstroms von Anodenabgas ist es grundsätzlich möglich, einen tatsächlich existierenden Turbolader, der an sich zur Aufladung einer Brennkraftmaschine dient, im Brennstoffzellensystem 1 zu verwenden. Alternativ kann eine funktionsfähige Konstruktion vergleichsweise einfach an den zu fördernden Volumenstrom adaptiert werden. Im einfachsten Fall kann der jeweilige Abgasturbolader 42 mit seiner Turbine verwendet werden. Auf diese Weise können beispielsweise die in den Fig. 1 bis 3 und 6 gezeigten Ausführungsformen realisiert werden.

Bei der in Fig. 4 gezeigten Ausführungsform umfasst die Fördereinrichtung 40 einen Elektroantrieb 45 zum Antreiben des Heißgasförderers 41. Zur Realisierung des Heißgasförderers 41 kann grundsätzlich wieder auf an sich bekannte Frischgasladeeinrichtungen von Brennkraftmaschinen zurückgegriffen werden. Beispielsweise kann der Heißgasförderer 43 wieder durch einen Verdichter eines Abgasturboladers gebildet werden, der hier ohne seine Turbine zum Einsatz kommt. Die Turbine ist dabei durch den Elektroantrieb 45 ersetzt. Alternativ sind für aufgeladene Brennkraftmaschinen auch Frischgasladeeinrichtungen mit einem elektrisch oder mechanisch angetriebenen Lader 46 bekannt, wobei dann besagter Lader 46 als Heißgasförderer 41 verwendet werden kann.

Auch bei der in Fig. 4 gezeigten Ausführungsform ist die Rezirkulationsleitung 37 über den Rezirkulationseingang 14 an den Reformer 3 angeschlossen. Alternativ ist auch hier denkbar, die Rezirkulationsleitung 37 ausgangsseitig an die Reformeroxidatorleitung 20 anzuschließen.

Die in den Ausführungsformen der Fig. 1 bis 4 und 6 verwendeten Heißgasförderer 41 können somit grundsätzlich nach Art eines Verdichters 43 ausgestaltet werden, wie er an sich aus Frischgasladeeinrichtungen von Brennkraftmaschinen bekannt ist. Die Erfindung ist jedoch nicht auf derartige Ausführungsformen beschränkt, sondern soll grundsätzlich jeglichen geeigneten Heißgasförderer 41 erfassen.

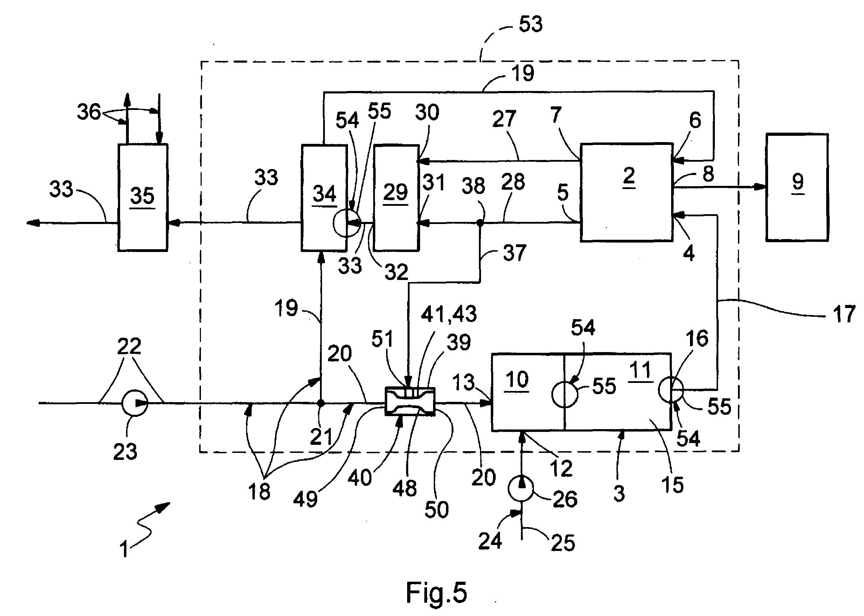

Bei der in Fig. 5 gezeigten Ausführungsform ist der Heißgasförderer 41 durch eine Saugstrahlpumpe 47 gebildet. Die Saugstrahlpumpe 47 weist ein Venturi-Rohr 48 auf, das einen Einlass 49, einen Auslass 50 und einen seitlichen Sauganschluss 51 der Saugstrahlpumpe 47 definiert. Die Saugstrahlpumpe 47 ist in die Reformeroxidatorleitung 20 eingebunden. Hierzu ist die Reformeroxidatorleitung 20 an den Einlass 49 und den Auslass 50 angeschlossen. Die Rezirkulationsleitung 47 ist ausgangsseitig an den Sauganschluss 51 angeschlossen. Die Saugstrahlpumpe 47 lässt sich besonders einfach durch Verwendung entsprechender Materialien mit der erforderlichen Heißgasbeständigkeit versehen und lässt sich dadurch besonders preiswert realisieren. Bei der Ausführungsform gemäß Fig. 5 ist die Rezirkulationsleitung 37 über die Fördereinrichtung 40 an die Reformeroxidatorleitung 20 angeschlossen.

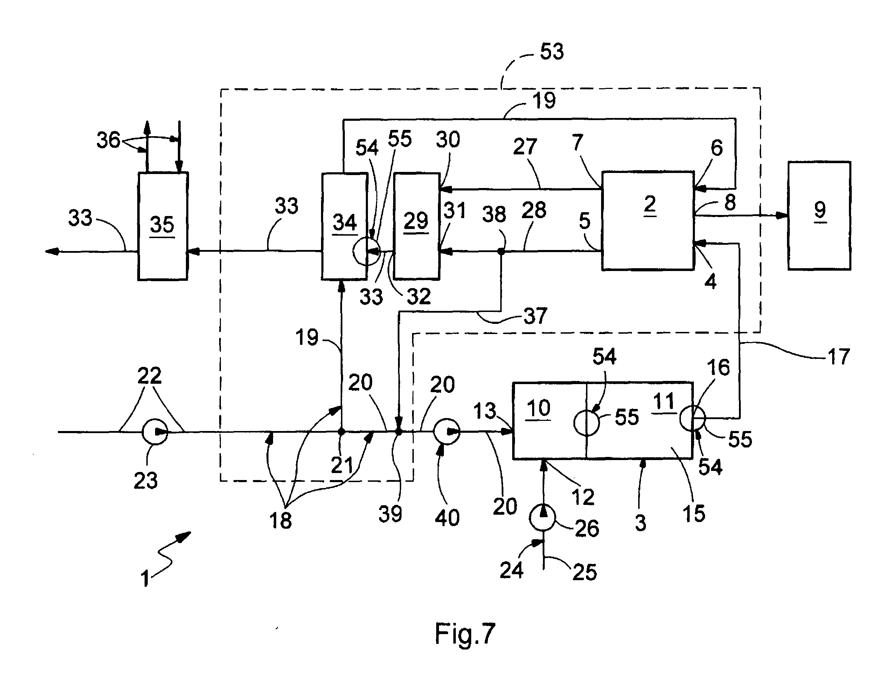

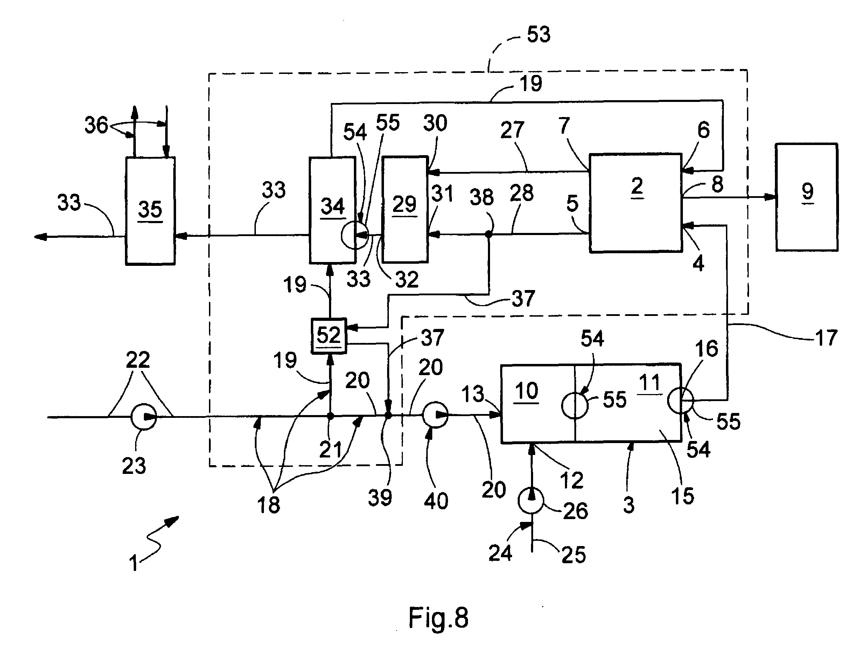

Bei den Ausführungsformen der Fig. 6 bis 8 ist die Fördereinrichtung 40 in die Reformeroxidatorleitung 20 eingebunden. Des Weiteren ist bei diesen Ausführungsformen die Rezirkulationsleitung 37 stromauf der Fördereinrichtung 40 über die Anschlussstelle 39 an die Reformeroxidatorleitung 20 angeschlossen. Bei diesen Ausführungsformen kommt es in der Reformeroxidatorleitung 20 stromab der Anschlussstelle 39 zu einer Durchmischung zwischen Anodenabgas und dem Reformer 3 zugeführten Oxidatorgas. Hierdurch kommt es zu einer Abkühlung des Anodenabgases bis das Gemisch die Saugseite der Fördereinrichtung 40 erreicht. Dementsprechend ist es bei dieser Ausführungsform grundsätzlich möglich, die Fördereinrichtung 40 für vergleichsweise niedrige Temperaturen auszulegen, so dass sie insgesamt vergleichsweise preiswert ausgestaltet werden kann. Die in Fig. 8 gezeigte Ausführungsform unterscheidet sich von der in Fig. 7 gezeigten Ausführungsform dadurch, dass gemäß Fig. 8 optional ein Rezirkulationswärmeübertrager 52 vorgesehen sein kann, der einerseits in die Rezirkulationseinheit 37 und andererseits in die Brennstoffzellenoxidatorleitung 19 eingebunden ist. Der Rezirkulationswärmeübertrager 52 realisiert dadurch eine wärmeübertragende Kopplung zwischen dem rückgeführten Anodenabgas und dem der Brennstoffzelle 2 zugeführten Oxidatorgas, wodurch das Anodenabgas signifikant abgekühlt werden kann. Im gezeigten Beispiel ist der Rezirkulationswärmeübertrager 52 stromauf des Hauptwärmeübertragers 34 in die Brennstoffzellenoxidatorleitung 19 eingebunden.

Alternativ ist auch eine Ausführungsform möglich, bei welcher der Rezirkulationswärmeübertrager 52 stromauf der Anschlussstelle 39 in die Reformeroxidatorleitung 20 eingebunden ist.

Bei den hier gezeigten Ausführungsformen ist das Brennstoffzellensystem 1 außerdem mit einer thermisch isolierenden Isolationsbox 53 ausgestattet, die hier durch eine unterbrochene Linie angedeutet ist. Innerhalb dieser Isolationsbox 53 sind die besonders heißen Komponenten des Brennstoffzellensystems 1 angeordnet. In jedem Fall sind im Inneren der Isolationsbox 53 die Brennstoffzelle 2 und - soweit vorhanden - der Restgasbrenner 29 und der Hauptwärmeübertrager 34 angeordnet. Bei den Ausführungsformen der Fig. 1 bis 6 ist außerdem die Fördereinrichtung 40 zumindest teilweise innerhalb der Isolationsbox 53 angeordnet. Beispielsweise kann der Elektroantrieb 45 gemäß Fig. 4 außerhalb der Isolationsbox 53 angeordnet sein. Ebenso kann bei diesen Ausführungsformen der Reformer 3 innerhalb der Isolationsbox 53 angeordnet sein. Im Unterschied dazu ist bei den Ausführungsformen der Fig. 7 und 8 die Fördereinrichtung 40 außerhalb der Isolationsbox 53 angeordnet. Hierdurch benötigt die Fördereinrichtung 40 nur eine vergleichsweise geringe Hitzebeständigkeit, wodurch sie sich vergleichsweise preiswert realisieren lässt. Ebenso kann bei diesen Ausführungsformen der Reformer 3 bevorzugt außerhalb der Isolationsbox 53 angeordnet sein. Bei allen Ausführungsformen sind vorzugsweise der Zusatzwärmeübertrager 35 und der jeweilige Verbraucher 9 außerhalb der Isolationsbox 53 angeordnet. Das Brennstoffzellensystem 1 kann außerdem eine Sensorik 54 aufweisen, die im vorliegenden Fall durch mehrere Temperatursensoren 55 gebildet ist, die an geeigneten Messstellen angeordnet sind. Beispielsweise befindet sich ein Temperatursensor 54 zwischen dem Gemischbildungsabschnitt 10 und dem Katalysatorabschnitt 11 des Reformers 11. Ein weiterer Temperatursensor 55 ist am Brenngasausgang 16 angeordnet. Ein Temperatursensor 55 kann außerdem am Brennerabgasausgang 32 oder am Eingang des Hauptwärmeübertragers 34 angeordnet sein. Ferner kann auch am Anodenausgang 5 ein weiterer Temperatursensor 55 angeordnet sein.

## Patentansprüche

1. Brennstoffzellensystem, insbesondere für ein Kraftfahrzeug,
- mit einer Brennstoffzelle (2) zur Stromerzeugung aus Brenngas und Oxidatorgas,
- mit einem Reformer (3) zur Brenngaserzeugung aus Kraftstoff und Oxidatorgas,
- mit einer Anodenabgasleitung (28) zum Abführen von Anodenabgas aus der Brennstoffzelle (2), die an die Brennstoffzelle (2) angeschlossen ist,
- mit einer Reformeroxidatorleitung (20) zur Versorgung des Reformers (3) mit Oxidatorgas, die an den Reformer (3) angeschlossen ist,
- mit einer Rezirkulationsleitung (37) zum Rückführen von Anodenabgas zum Reformer (3), die eingangsseitig an die Anodenabgasleitung (28) und ausgangsseitig an den Reformer (3) oder an die Reformeroxidatorleitung (20) angeschlossen ist,
- mit einer Fördereinrichtung (40) zum Antreiben des Anodenabgases,
- wobei die Fördereinrichtung (40) einen Heißgasförderer (41) zum Antreiben von ungekühltem Anodenabgas aufweist,
- wobei ein Restgasbrenner (29) vorgesehen ist, der eingangsseitig an die Anodenabgasleitung (28) sowie an eine an die Brennstoffzelle (2) angeschlossene Kathodenabgasleitung (27) und ausgangsseitig an eine Brennerabgasleitung (33) angeschlossen ist,
**dadurch gekennzeichnet,**
**dass** die Fördereinrichtung (40) durch einen Abgasturbolader (42) gebildet ist, dessen Verdichter (43) den Heißgasförderer (41) bildet und dessen Turbine (44) den Verdichter (43) antreibt und in die Brennerabgasleitung (33) eingebunden ist.

2. Brennstoffzellensystem nach Anspruch 1,
**dadurch gekennzeichnet,**
- **dass** in die Brennerabgasleitung (33) ein Wärmeübertrager (34) eingebunden ist,
- **dass** die Turbine (44) des Abgasturboladers (42) stromauf oder stromab des Wärmeübertragers (34) in die Brennerabgasleitung (33) eingebunden ist.

3. Brennstoffzellensystem nach Anspruch 1 oder 2,
**dadurch gekennzeichnet,**
**dass** der Heißgasförderer (41) in die Rezirkulationsleitung (37) eingebunden ist.

4. Brennstoffzellensystem nach Anspruch 1 oder 2, **dadurch gekennzeichnet,**
- **dass** die Fördereinrichtung (40) in die Reformeroxidatorleitung (20) eingebunden ist,
- **dass** die Rezirkulationsleitung (37) stromauf der Fördereinrichtung (40) an die Reformeroxidatorleitung (20) angeschlossen ist.

5. Brennstoffzellensystem nach einem der Ansprüche 1 bis 4,
**dadurch gekennzeichnet,**
**dass** in die Rezirkulationsleitung (37) ein Rezirkulationswärmeübertrager (52) eingebunden ist.

## Claims

1. A fuel cell system, in particular for a motor vehicle,
- with a fuel cell (2) for power generation from fuel as an oxidant gas,
- with a reformer (3) for fuel gas generation from fuel and oxidant gas,
- with an anode waste gas line (28) for discharging anode waste gas from the fuel cell (2), which is connected to the fuel cell (2),
- with a reformer oxidant line (20) for supplying the reformer (3) with oxidant gas, which is connected to the reformer (3),
- with a recirculation line (37) for returning anode waste gas to the reformer (3), which on the inlet side is connected to the anode waste gas line (28) and on the outlet side to the reformer (3) or to the reformer oxidant line (20),
- with a conveying device (40) for driving the anode waste gas,
- wherein the conveying device (40) comprises a hot gas conveyor (41) for driving un-cooled anode waste gas,
- wherein a residual gas burner (29) is provided, which on the inlet side is connected to the anode waste gas line (28) and to a cathode waste gas line (27) connected to the fuel cell (2) and on the outlet side to a burner waste gas line (33), **characterized in that**
the conveying device (40) is formed by an exhaust gas turbocharger (42) whose compressor (43) forms the hot gas conveyor (41) and whose turbine (44) drives the compressor (43) and is incorporated in the burner waste gas line (33).

2. The fuel cell system according to Claim 1, **characterized in that**
- in the burner waste gas line (33) a heat transfer device (34) is incorporated,
- the turbine (44) of the exhaust gas turbocharger (42) is incorporated in the burner waste gas line (33) upstream or downstream of the heat transfer device (34).

3. The fuel cell system according to Claim 1 or 2, **characterized in that**
the hot gas conveyor (41) is incorporated in the recirculation line (37).

4. The fuel cell system according to Claim 1 or 2, **characterized in that**
- the conveying device (40) is incorporated in the reformer oxidant line (20),
- the recirculation line (37) is connected to the reformer oxidant line (20) upstream of the conveying device (40).

5. The fuel cell system according to any one of the Claims 1 to 4,
**characterized in that**
in the recirculation line (37) a recirculation heat transfer device (52) is incorporated.

## Revendications

1. Système de cellule de combustible, notamment pour un moteur à combustion interne,
- comportant une cellule de combustion (2) pour générer du courant à partir du gaz de combustion et du gaz oxydant,
- comportant un reformeur (3) pour générer du gaz de combustion à partir du carburant et du gaz oxydant,
- comportant une conduite de gaz d'échappement d'anode (28) pour évacuer le gaz d'échappement d'anode hors de la cellule de combustion (2), qui est raccordé à la cellule de combustible (2),
- comportant une conduite d'oxydant de reformeur (20) pour alimenter le reformeur (3) avec du gaz oxydant, qui est raccordé au reformeur (3),
- comportant une conduite de recirculation (37) pour réintroduire du gaz d'échappement d'anode dans le reformeur (3), qui est raccordé du côté d'entrée à la conduite de gaz d'échappement d'anode (28) et du côté de sortie au reformeur (3) ou à la conduite d'oxydant de reformeur (20),
- comportant un dispositif de transport (40) pour entraîner le gaz d'échappement d'anode,
- dans lequel le dispositif de transport (40) présente un transporteur de gaz chaud (41) pour entraîner le gaz d'échappement d'anode non refroidi,
- dans lequel un brûleur de gaz résiduel (29) est prévu, qui est raccordé du côté d'entrée à la conduite de gaz d'échappement d'anode (28) ainsi qu'à une conduite de gaz d'échappement de cathode (27) raccordée à la cellule de combustible (2) et du côté de sortie à une conduite de gaz d'échappement de brûleur (33),
**caractérisé en ce que**
le dispositif de transport (40) est formé par un turbocompresseur de gaz d'échappement (42), dont le compresseur (43) forme le transporteur de gaz chaud (41) et dont la turbine (44) entraîne le compresseur (43) et est intégré dans la conduite de gaz d'échappement de brûleur (33).

2. Système de cellule de combustible selon la revendication 1,
**caractérisé en ce que**
- un échangeur de chaleur (34) est intégré dans la conduite de gaz d'échappement de brûleur (33),
- la turbine (44) du turbocompresseur de gaz d'échappement (42) est intégrée en amont ou en aval de l'échangeur de chaleur (34) dans la conduite de gaz d'échappement de brûleur (33).

3. Système de cellule de combustible selon les revendications 1 ou 2,
**caractérisé en ce que**
le transporteur de gaz chaud (41) est intégré dans la conduite de recirculation (37).

4. Système de cellule de combustible selon la revendication 1 ou 2,
**caractérisé en ce que**
- le dispositif de transport (40) est intégré dans la conduite d'oxydant de reformeur (20),
- la conduite de recirculation (37) est raccordé en amont du dispositif de transport (40) à la conduite d'oxydant de reformeur (20).

5. Système de cellule de combustible selon une des revendications 1 à 4,
**caractérisé en ce que**
dans la conduite de recirculation (37) est intégré un échangeur thermique de recirculation (52).
